# EUROPÄISCHE PATENTSCHRIFT

(11) **EP 1 372 823 B1**
(45) Veröffentlichungstag und Bekanntmachung des Hinweises auf die Patenterteilung: **21.05.2014**
(21) Anmeldenummer: 02718170.0
(22) Anmeldetag: 04.03.2002
(51) Int. Cl.: B01D 53/22, B01D 53/14, C01B 7/07, C01B 7/19, C01C 1/02

(54) **VERFAHREN ZUR AUFREINIGUNG VON KORROSIV WIRKENDEN GASEN**
METHOD FOR THE PURIFICATION OF CORROSIVE GASES
PROCEDE POUR ULTRAPURIFIER DES GAZ A EFFET CORROSIF

(30) Priorität: 28.03.2001 DE 10115345
(43) Veröffentlichungstag der Anmeldung: 02.01.2004
(73) Patentinhaber: BASF SE, 67056 Ludwigshafen (DE)
(72) Erfinder: NEUMANN, Ewald, 64560 Riedstadt/Erfelden (DE); HIMMLER, Wolfgang, 68799 Reilingen (DE); BÜTTNER, Werner, 64291 Darmstadt/Arheilgen (DE); FRITSCH, Harald, 64521 Gross-Gerau (DE); SCHMIDT, Hans-Jürgen, 64747 Breuberg/Sandbach (DE); HOSTALEK, Martin, Singapore 269260 (SG)
(86) Internationale Anmeldenummer: PCT/EP2002/002295
(87) Internationale Veröffentlichungsnummer: WO 2002/078820

(56) Entgegenhaltungen:
- EP-A- 1 065 168
- WO-A-96/39266
- US-A- 5 196 616
- US-A- 5 749 941
- CHEMICAL ABSTRACTS, vol. 122, no. 10, 6. März 1995 (1995-03-06) Columbus, Ohio, US; abstract no. 110018g, MUKHERJEE, D. ET AL.: "Ultrapurification and recycling of hydrofluoric acid etching solutions by reverse osmosis: membrane performance and multicomponent rejection" Seite 270; XP000662337 & CHEM. ENG. COMMUN., Nr. 130, 1994, Seiten 127-138,

## Beschreibung

Die vorliegende Erfindung betrifft ein neues Verfahren zur Herstellung von hochreinen, äußerst partikelarmen Chemikalien wie Ammoniakgas , Fluorwasserstoff und Chlorwasserstoff, welche auch als wässrige Lösungen in der Halbleitertechnologie Anwendung finden.

Zur Herstellung hochintegrierter elektronischer Schaltungen (Mikrochips) werden unter anderem extrem hochreine Gase und wässrige Chemikalienlösungen benötigt. Bedeutende Lösungen sind: Ammoniaklösung aus Ammoniakgas, Flusssäurelösung aus Fluorwasserstoff, Salzsäurelösung aus Chlorwasserstoff.

Reine Lösungen werden im allgemeinen hergestellt, indem technische Chemikalienqualitäten durch statische Filtration von partikulären Verunreinigungen befreit und mit Ultra-Reinstwasser zu einer Lösung mit einer gewünschten Konzentration eingestellt werden. In dieser Weise wird beispielsweise ein Aufreinigungsverfahren von Salzsäure in US 5846387 beschrieben.

Die Ultrafiltration stellt bisher heute das einzige und effektivste Verfahren dar, durch das kleinste Teilchen aus Gasen abgetrennt werden können. Jedoch werden nach literaturbekannten Daten durch Ultrafiltrationen lediglich Partikel hochmolekularer organischer Verbindungen abgetrennt, so dass nurTeilchen mit einer Partikelgröße > 10 Dalton auf diese Weise entfernt werden können. Dagegen besitzen Metallionen aber auch salzhaltige Teilchen Partikelgrößen von < 1 bis 5 Dalton. Diese Teilchengrößen können durch eine Ultrafiltration nicht abgetrennt werden. Teilchen mit Durchmessern kleiner 10 Dalton lassen sich bisher lediglich über eine Hyperfiltration oder durch Umkehrosmose abtrennen. Die Umkehrosmose ist sowohl für die Aufreinigung von Gasen als auch von hochaggressiven Chemikalien aufgrund der notwendigen verfahrenstechnischen Vorkehrungen nicht geeignet. Versuche mit verschiedenen Umkehrosmoseanlagen zeigten, dass bei größeren Abweichungen des pH-Werts vom neutralen Wert, die Membranen quellen und undurchlässig werden, d. h. "verblocken". Auch bedarf es zur eigentlichen Teilchenabtrennung durch Umkehrosmoseanlagen, Lösungen unterschiedlicher Konzentrationen an der semipermeablen Trennmembrane.

Auch die üblichweise eingesetzten Absorptionskolonnen sind zu einer solchen Aufreinigung nicht geeignet. Es besteht einmal die Gefahr des Gasdurchbruches bei Randgängigkeit der Kolonne. Ein anderes Problem besteht in einer inhomogenen Schichtung der Füllkörper in der Kolonne, welche zur Oberflächenvergrößerung der Grenzschichten eingesetzt werden. Auch besteht in der eigentlichen Auslegung der Kolonnen ein großes Problem, da diese vorwiegend intuitive erfolgt. Es gibt keine rechnerische Methode zur Auslegung entsprechender Kolonnen, die eine Vorhersage der Reinigungswirkung im ppt-Bereich erlauben, zumal die zu reinigenden aggressiven Gase sowohl mit den Füllkörpern als auch mit den eingesetzten Lösungsmitteln und dem Material der Kolonnen in Wechselwirkung treten.

Es ist bekannt, aufgereinigte und druckverflüssigte Gase zusätzlich über Verdampfer zu leiten und das Gas anschließend durch Absorption von metallischen Verunreinigungen über einen oder mehrere Wäscher zu reinigen. Als Waschflüssigkeit wird dabei eine mit Reinstwasser gesättigte Lösung der gleichen Chemikalie eingesetzt.

In EP 856715 A2 wird ein Verfahren zur Entfernung von metallischen Verunreinigungen aus korrosiven Gasen beschrieben, indem nach der Erzeugung der Gasphase letztere in eine Vorlage geleitet wird. Es wird durch dieses Verfahren sowohl eine Verringerung der Metallionenkonzentration als auch der Partikelzahl erzielt, da das Überleiten der Gasphase ohne mechanisches Pumpen zwangsläufig durch den Druckunterschied erfolgt.

US-A-5749941 offenbart ein Verfahren zur Absorption einer oder mehrerer gasförmiger Verbindungen aus einer Gasphase durch Membranfiltration, indem die die zu absorbierenden Verbindungen enthaltende Gasphase mit einer flüssigen Phase in Kontakt gebracht wird, wobei die Gasphase und die flüssige Phase durch eine hydrophobe Membran getrennt sind.

Alle bekannten Verfahren oder Verfahrensanordnungen zur Gewinnung hochreiner, partikelarmer Lösungen weisen sehr ähnliche Probleme auf Wird das gereinigte Gas direkt in eine Vorlage mit Reinstwasser eingeleitet, ergeben sich an der Einleitdüse sehr hohe Gasgeschwindigkeiten, die einen Abrieb in und an der Düse bewirken und damit eine erneute partikuläre und kationische Verunreinigung der Lösung zur Folge haben.

Da das Lösen der gereinigten Gase in Wasser eine exotherme Reaktion darstellt, sind Vorkehrungen für eine gute Wärmeabfuhr zu treffen.

Mit einer ungenügenden Wärmeabfuhr in der Vorlage sind starkeTemperaturschwankungen und damit auch erhebliche Druckschwankungen verbunden. Dieses wiederum führt zu Konzentrationsabweichungen in der Lösung. In der Regel wird deshalb versucht, die Lösung zu homogenisieren , indem das Gas direkt in die Lösung eingeleitet wird und gleichzeitig über eine Bypassstrecke die Lösung umgepumpt wird. Dies gelingt jedoch nur unvollständig, da einfaches Umpumpen ein statischer Vorgang ist, wodurch eine Schichtung der Lösung im Lagertank erfolgt. Ein vollkommen homogenes Mischen der Lösung erfolgt hierdurch nicht.

Um Chemikalien wie Ammoniak, Flußsäure und Salzsäure in der Elektronikindustrie und Halbleiterherstellung einsetzen zu können, müssen möglichst metallionenfreie Qualitäten zur Verfügung stehen.

Entsprechende Verunreinigungen werden oft mit Hilfe von Füllkörperkolonnen durch Absorption aus dem Gas ausgewaschen. Füllkörper werden bei diesem Vorgang eingesetzt, um die Austauschfläche zwischen Waschflüssigkeit und Gas zu erhöhen und die Verweilzeit des Gases in der Kolonne zu verlängern. Es besteht bei Füllkörperkolonnen die Gefahr, dass ungereinigtes Gas durchbricht (Randgängigkeit des Gases), sowie dass Aerosole in den reinen Kreislauf übergeleitet werden aufgrund eines begrenzten Abscheidgrades des im Kolonnenkopf eingebauten Demisters. Der Reinigungsgrad bei Kolonnen, insbesondere beim Stoffaustausch im ppt- Bereich, lässt sich meist nur intuitiv durch Zuschläge einstellen. Der Idealzustand möglichst gleich langer Wege der einzelnen Stromfäden, gleicher Strömungsgeschwindigkeiten und gleichbleibende Mengenverhältnisse zwischen Flüssigkeit und Gas wird in keiner Kolonne vollständig erreicht. Folglich werden zur Optimierung oft mehrere Kolonnen hintereinander geschaltet, um eine konstante Aufreinigung im hochreinen Bereich gewährleisten zu können.

Durch die bekannten Aufreinigungsverfahren zur Herstellung von hochreinen Chemikalien lassen sich organische Verunreinigungen, wie z. B. in druckverflüssigten technischen Ammoniakgasen immer enthaltene Öle, nicht entfernen. Typische Gehalte von Ölen im technischen Ammoniakgas liegen zwischen 10 bis 50 ppm/w. Ohne eine Entfernung der Öle kommt es daher zu keiner nennenswerten Abreicherung von organischen Verunreinigungen ("TOC" total organic carbon) in den aufgereinigten Lösungen.

Aufgabe der vorliegenden Erfindung ist es somit, ein in einfacher Weise einsetzbares Mittel bzw. ein in einfacher Weise durchführbares, preiswertes Verfahren zur Aufreinigung von korrosiv wirkenden Gasen und zur Herstellung von aufgereinigten Lösungen dieser Gase zur Verfügung zu stellen, welches in einer einfachen Anlage durchführbar ist und zu Produkten mit konstanter, hochreiner, partikelarmer Qualität führt und welches die vorher beschriebenen Nachteile nicht aufweist. Aufgabe der Erfindung ist es auch, ein entsprechendes Verfahren zur Verfügung zu stellen, welches angewendet werden kann, um druckverflüssigte Gase, wie z.B. Ammoniak, Flusssäure oder Salzsäure aufzureinigen.

Die Lösung der Aufgabe erfolgt durch ein kontinuierliches Verfahren zur Entfernung von partikulären, metallischen, ionischen anorganischen, ionischen organischen aber auch von nichtionischen organischen Verunreinigungen und in Spuren vorhandener Salze oder Öle aus korrosiv wirkenden Gasen, indem in mindestens einem Verfahrensschritt das Gas mit einem Absorptionsmittel angereichert wird, welches mit dem Gas gut mischbar ist und in dem die im Gas enthaltenen Verunreinigungen gut löslich sind, und anschließend das Gas einer Membranfiltration unterzogen wird, wobei der gereinigte Gasstrom die Membran durchströmt, eine Kondensierte Phase des Absorptionsmittels auf der Membranoberfläche gebildet wird und das mit Verunreinigungen angereicherte Absorptionsmittel kontinuierlich abgezogen wird.

Dieses erfindungsgemäße Reinigungsverfahren weist an sich die folgenden Verfahrensschritte auf:
a) Eine im flüssigen Zustand vorliegende Chemikalie wird in einem Verdampfer in den gasförmigen Zustand überführt.
b) Die so erhaltene Gasphase wird mittels eines Vorfilters von groben partikulären Verunreinigungen und zum Teil von als Aerosol vorliegenden Verunreinigungen befreit, wobei letztere einem Auffangbehälter (7) zugeführt werden,
c) Durch Einstellung des Drucks auf einen Wert in einem Bereich zwischen 2 bis 8 bar, vorzugsweise 3 bis 8 bar, und gleichzeitiger Erniedrigung der Temperatur auf einen Wert im Bereich von 20 bis 50°C werden weitere im Gasstrom enthaltene organische Verunreinigungen abgeschieden.
d) Der so vorgereinigte Gastrom wird durch mindestens zwei hintereinander geschaltete Feinstfilter mit abnehmender Porengröße geführt, wobei in der Gasphase vorliegende feinste Partikel über eine Membran abgeschieden werden.
e) Noch enthaltene organische Verunreinigungen werden mit Hilfe eines Organikabscheiders abgetrennt und in einen Auffangbehälter (7) geleitet.
f) Dem Gasstrom wird über einen Sättigungsbehälter ein Absorptionsmittel zugeführt, wobei letzteres mit dem zu reinigenden Gas gut mischbar ist, eine Oberflächenspannung >50 dynes aufweist.
g) Der Gasstrom wird einer Membranfiltration unterzogen, wobei Absorptionsmittel entzogen wird, und wird anschließend in einem Mischer in eine ständig zirkulierende Lösung eingeleitet, deren Konzentration mittels Schallgeschwindigkeitsmessung überwacht und geregelt wird.

Erfindungsgemäß wird das Verfahren durchgeführt, indem eine im flüssigen Zustand vorliegende Chemikalie ausgewählt aus der Gruppe Ammoniak, Fluorwasserstoff und Salzsäure eingesetzt wird.

Die Durchführung des Verfahrens erfolgt, indem die Einstellung des Drucks und der Sättigung des Gases mit Absorptionsmittel mit Hilfe eines Druckminderers und eines Wärmetauschers erfolgt.

Im Organikabscheider erfolgt durch Druck- und Temperatureinstellung aus dem entstandenen Mehrphasengemisch eine Trennung von leicht siedenden und schwer siedenden organischen Verunreinigungen, so dass die leicht siedenden Verunreinigungen als Gas- bzw. Dampfgemisch und die schwer siedenden als kondensiertes Öl oder in Aerosolform vorliegen, die anschließend mittels geeigneter Membranen abgetrennt werden.

Erfindungsgemäß ist dem Organikabscheider ein weiterer Druckminderer zur Einstellung des Drucks auf einen Wert im Bereich zwischen 1 bis 6 bar nachgeschaltet.

Gegenstand der vorliegenden Erfindung ist somit ein entsprechendes-Verfahren, in dem zur Abtrennung von feinsten partikulären, metallischen, ionischen anorganischen, ionischen organischen aber auch von nichtionischen organischen Verunreinigungen und in Spuren vorhandener Salze oder Öle Membrane aus einem hydrophoben Trägermaterial verwendet werden, welches dem mit g) gekennzeichneten Verfahrensschritt entspricht.

In einer bevorzugten Ausführungsform des Verfahrens wird als Absorptionsmittel Ultra-Reinstwasser verwendet wird.

In einer besonderen Ausgestaltung des Verfahrens kann der Membranfiltration des Verfahrensschritts g) ein Gaswäscher in Form einer Füllkörperkolonne mit eingebautem Demister nachgeschaltet sein, welcher im Störfall als Puffervolumen dient.

Der Gasstrom kann im Verfahrensschritt g) in einen Mischer mit mehreren Einleitrohren geführt werden, worin die Lösung zirkuliert und beim Lösen entstehende exotherme Wärme in einer Schlaufe oder einem oder mehreren Wärmetauschern abgeführt wird.

Zur Durchführung des Verfahrens wird die Konzentration des gelösten gereinigten Gases durch Schallgeschwindigkeitsmessung kombiniert mit einer genauen Bestimmung der Lösungstemperatur überwacht und geregelt.

Insbesondere wird die Aufgabe der vorliegenden Erfindung gelöst durch die Verwendung einer Membran, welche einen Flüssigkeitsfilm aufweist, zur Abtrennung sowohl von gelösten als auch partikulären Verunreinigungen aus korrosiv wirkenden Gasen.

Das erfindungsgemäße Reinigungsverfahren erfolgt kontinuierlich in verschiedenen, nacheinander geschalteten Verfahrensschritten, wobei die Verfahrensschritte so gewählt sind, dass sie zusammen zu einer optimalen Entfernung sowohl von von partikulären, metallischen, ionischen anorganischen, ionischen organischen aber auch von nichtionischen organischen Verunreinigungen und in Spuren vorhandener Salze oder Öle führen. Bei den einzelnen Verfahrensschritten handelt es sich sowohl um dem Fachmann an sich bekannte Schritte als auch um neuartige Reinigungsstufen, die in Kombination miteinander zu einer bisher nicht erzielten Aufreinigung von korrosiv wirkenden Gasen führt. Durch das Verfahren lassen sich Verunreinigungen so weit entfernen, dass sie nicht mehr nachweisbar sind, bzw. die Konzentrationen <10 ppt sind.

Vereinfacht lässt sich das erfindungsgemässe Verfahren als ein Verfahren darstellen, in welches folgende Trennmethoden integriert sind:
1. Abtrennung von organischen Verunreinigungen im Rohgas unter Verwendung von speziellen Abscheidern.
2. Impfen des Gasstromes mittels speziellem Absorptionsmittel zum Aufbau einer geeigneten Grenzschicht.
3. Abscheidung von flüchtigen Säuren, anionischen Verunreinigungen wie z. B. Chloride, Nitrate, von Spurenverunreinigungen, wie Metallionen oder minderflüchtige Salze oder sonstigen Verunreinigungen der Gase mittels eines Flüssigkeitsfilms.
4. Abscheidung von verunreinigten Flüssigkeiten nach erfolgter Aufreinigung durch eine hydrophobe Membran.
5. Reglung der Anlage zur Herstellung einer hochreinen sub ppt Lösung.
6. Konzentrationsmessung mittels Schallwandler in einer speziellen Rohrsonde und hiermit gekoppelter Regelung der übrigen Verfahrensparameter (Druck, Temperatur, Strömungsgeschwindigkeiten).

An sich erfolgt die erfindungsgemäße Aufreinigung, indem unter Druck verflüssigte Chemikalien in einem Verdampfer (1) in den gasförmigen Zustand überführt werden. Dieses erfolgt bei HF bei einer Temperatur > 19°C bei Normaldruck Durch einen Vorfilter (2) wird dieses Rohgas von groben partikelförmigen Verunreinigungen, die sich an der Filteroberfläche absetzen, befreit. Gleichzeitig wird durch den Vorfilter(2) bereits ein Teil der im Gas enthaltenen Aerosole abgetrennt. Die so abgeschiedenen Aerosole werden in einem Auffangbehälter (7) gesammelt.

In Gasen bzw. in den druckverflüssigten Gasen liegen schwer siedende organische Verunreinigungen, vorzugsweise Öle und Wässer aus dem Herstellprozess in Bulk- oder Aerosolfom vor, während leichtsiedende Verunreinigungen als Gas- oder Dampfgemisch vorliegen. Die Entfernung von solchen organischen Verunreinigungen erfolgt unter Ausnutzung unterschiedlicher Dampfdruckwerte einzelner Stoffe in Mehrstoffgemischen. Zu diesem Zweck wird mit Hilfe eines Druckminderers (3) und eines Wärmetauschers (4) in der Gasphase ein bestimmter Vordruck und eine bestimmte Temperatur eingestellt. Es hat sich gezeigt, dass eine gute Abtrennung organischer Verunreinigungen aus der Gasphase erzielt wird, wenn hierbei der Druck im Bereich zwischen 3 bis 8 bar liegt und die Temperatur auf einen Wert im Bereich von 20 bis 50°C eingestellt wird.

Eine erste Abtrennung von organischen Verunreinigungen erfolgt, nachdem partikelförmige Verunreinigungen, welche in Form von Röhrenablagerungen oder Schmutzpartikeln vorliegen, in einer ersten Stufe abgetrennt worden sind. Die Abtrennung der partikelförmigen Verunreinigungen erfolgt, indem das Gas durch mindestens zwei hintereinander geschaltete Feinstfilter (5), welche in Richtung des Gasstroms abnehmende Porengrößen aufweisen, geführt wird.

Nachdem der Gasstrom die Feinstfilter bzw. Filtermembrane durchlaufen hat tritt er in einen Organikabscheider (6) ein. Zur Abscheidung der als Aerosol vorliegenden Verunreinigungen wird der Gasstrom über verschiedenartige, in Abhängigkeit vom Herstellprozess der einzelnen Gase ausgewählte Membranen geleitet. Dabei werden die Aerosole so in den einzelnen Membranen umgeleitet, dass sich beim Zusammenfluss der Aerosolströme Tropfen bilden. Durch Auswahl geeigneter Membranmaterialien, welche eine geeignete Porenstruktur aufweisen, wird ein "Mitreisen" der Tropfen verhindert. Die zurückgehaltenen Tropfen fallen der Schwerkraft folgend in Richtung des Kondensatableiters und werden in einem Auffangbehälter (7) gesammelt.

Es wurde gefunden, dass im Gasstrom nach dem Passieren des Organikabscheiders der Gehalt an schwersiedenden Verunreinigungen, d. h. an sogenannten Restölen, unterhalb der Nachweisgrenze liegt, d. h. <1 ppb liegt. Beispielsweise sind in Ammoniakgas, welches nach dem erfindungsgemäßen Verfahren gereinigt wurde, mit den heute gebräuchlichen Analysemethoden keine Öle mehr nachweisbar.

Gasförmige Öldämpfe bzw. organische Verunreinigungen, in Form von gebundenen flüchtigen Säuren, sowie anionische Verunreinigungen wie Chloride, Nitrat, in Spuren enthaltene Metallionen und minderflüchtige Salze aber evtl. auch noch in geringsten Spuren enthaltene feinste partikelförmige Verunreinigungen unterschiedlicher chemischer Natur lassen sich in einer nachfolgenden Reinigungsstufe abtrennen. Die Abtrennung dieser Verunreinigungen erfolgt in einem abgewandelten Membranfiltrationsverfahren (10). Zur Durchführung dieser abgewandelten Membranfiltration wird der Druck des Gasstroms in einem zusätzlichen Druckminderer (8) weiter erniedrigt, vorzugsweise auf einen Wert im Bereich zwischen 1 bis 6 bar.

Weiterhin wird dem Gastrom ein Absorptionsmittel zugeführt, indem er durch einen Sättigungsbehälter (9) geführt wird. In Verbindung mit einem definierten Druckabfall und einer geeigneten Temperaturregelung lässt sich bei geeigneter Membranauswahl anschließend eine kondensierte Phase (Absorbens) an der Membranoberfläche (10) aufbauen. Hierbei spielt neben der Einstellung des Drucks und der Temperaturregelung des Gasstroms die Strömungsrichtung des Gases eine besondere Rolle, um auf der Membranoberfläche ein Druckgefälle von oben nach unten zu erreichen. Dieses ist von Bedeutung für die Ausbildung eines gleichmäßigen Flüssigkeitsfilms, der wiederum einen wesentlichen Einfluss auf die Entfernung der Verunreinigungen hat.
Unter geeigneten Bedingungen bildet sich ein gesättigter Flüssigkeitsfilm als kondensierte Phase auf der Membranoberfläche, wobei sich die Sättigungskonzentration entsprechend der Gastemperatur und dem Differenzdruck zwischen Phasengrenzfläche und Membrandruck einstellt.

Diese kondensierte Phase auf der Membranoberfläche wirkt ähnlich wie eine semipermeable Trennmembran in einer Umkehrosmoseanlage.

Es entsteht auf der Membranoberfläche im Flüssigkeitsfilm eine Wanderbewegung von oben nach unten. Infolge der kontinuierlichen Anströmung durch mit Absorbens versetztem, ungereinigten Gas findet durch Tropfenbildung im Flüssigkeitsfilm zum Kondensatableiter hin laufend eine Abtrennung von Verunreinigungen statt. Bei kontinuierlicher Prozessführung durchdringt das anströmende Gas im Gleichgewichtszustand die Flüssigkeitsschicht auf der Membranoberfläche, wobei an der Grenzschicht ein Stoffaustausch mit dem Absorbens stattfindet. Dem gesättigten Gas wiederum wird beim Durchströmen der hydrophoben Membran Feuchtigkeit, bzw. Absorbens entzogen.

Durch diese abgewandelte Membranfiltration können neben feinsten partikelförmigen Verunreinigungen unterschiedlicher Natur, einschließlich metallischer Partikel, sowohl anorganischer als auch organischer ionischer Verunreinigungen aber auch in Spuren vorhandene Salze oder Öle abgeschieden werden.

Zur Durchführung dieses Verfahrensschritts sind handelsübliche Membranfolien einsetzbar. Diese können aus unterschiedlichen Materialien bestehen und werden in Abhängigkeit von der zu reinigenden Chemikalie ausgewählt. Angepaßt an das zu reinigende korrosive Gas, der darin enthaltenen Verunreinigungen und an das eingesetzte Absorbtionsmittel stehen dem Fachmann verschiedenste Membranen zur Auswahl. Es können Membranfilter sowohl mit hydrophilen als auch mit hydrophoben, mikroporösen, dünnen Trennschichten verwendet werden. Die Wahl des Membranfilters ist insbesondere von dem eingesetzten Absorptionsmittel abhängig, da sich eine wirksame Abtrennung der noch im Gas enthaltenen Verunreinigungen nur dann durchführen läßt, wenn das Material des Membranfilters für das Absorbtionsmittel, in welchem die Verunreinigungen löslich sind, undurchlässig ist, jedoch das zu reingende Gas den Membranfilter ohne weiteres passieren kann. In diesem Fall läßt sich das Absorptionsmittel gemeinsam mit den Verunreinigungen vor dem Membranfilter vom Gasstrom abtrennen.

Es hat sich gezeigt, dass insbesondere zur Abtrennung von polaren und ionischen Verunreinigungen hydrophile Absorptionsmittel geeignet sind. Mit Verunreinigungen und Gas gesättigtes hydrophiles Absorptionsmittel ist besonders gut vom Gasstrom abzutrennen, wenn Membranfilter verwendet werden, die aus hydrophobem Material bestehen. Es sind Membranen geeignet, welche aus einem Material ausgewählt aus der Gruppe Polytetrafluorethylen, Perfluorethylenpropylen und Polyethylen, welches eine geeignete Porenweite und -struktur aufweist, hergestellt sind. Geeignet sind insbesondere entsprechende Materialien mit einer Porengröße kleiner als 3,5 µm, vorzugsweise einer Porengröße im Bereich von 2,5 bis 1 µm. Entsprechende Membranfilter sind im Handel in verschiedenen Ausführungsformen erhältlich, so dass es dem Fachmann ohne weiteres möglich ist, je nach Anforderungen einen geeigneten Membranfilter auszuwählen. Bei der Auswahl eines geeigneten Filters sind die Porengröße, bzw. die Porenweite, ebenso von Bedeutung wie der molekulare und strukturelle Aufbau der Membran. In Kombination mit den hydrophoben Eigenschaften des Materials tragen insbesondere diese Größen zu der Trenn- und Reinigungswirkung bei.

Als hydrophile Absorptionsmittel sind sowohl hydrophile organische als auch anorganische Lösungsmittel einsetzbar. Die Wahl des Absorptionsmittels ist von den im Gasstrom enthaltenen Verunreinigungen abhängig. Sofern es die enthaltenen Verunreinigungen erlauben, wird bevorzugt Ultra-Reinstwasser als preiswertes und leicht herstellbares Absorptionsmittel eingesetzt. Es kann aber auch jede andere Flüssigkeit in Verbindung mit einem hydrophoben Membranfilter verwendet werden, deren Oberflächenspannung >50 dynes/cm beträgt, die mit dem zu reinigenden Gas in jeder Konzentration sehr gut mischbar ist und eine ausreichende Absorptionskapazität gegenüber den enthaltenen Verunreinigungen aufweist. So können beispielsweise auch mit Wasser mischbare, hydrophile organische Lösungsmittel, wie niedermolekulare Alkohole verwendet werden. Dieses kann beispielsweise i- oder n-Propanol sein.
Flüssigkeiten mit einer Oberflächenspannung kleiner 50 dynes/cm sind in Kombination mit einem hydrophoben Membranfilter ungeeignet. Sie benetzen das hydrophobe Trägermaterial und machen es dadurch für Flüssigkeiten durchgängig. Die erwünschte Trennwirkung der Membran geht verloren.

Empfiehlt es sich für den gewünschten Trenneffekt Membranfilter mit hydrophilen Materialeigenschaften einzusetzen, ist es dem Fachmann ohne weiteres möglich, ein geeignetes Absorptionsmittel auszuwählen, welches den Membranfilter nicht durchdringt, gleichzeitig aber eine ausreichende Löslichkeit gegenüber den im Gasstrom enthaltenen Verunreinigungen aufweist und mit dem Gas gut mischbar ist.

Da ständig Absorptionsmittel, welches einen Flüssigkeitsfilm vor der Membran bildet, aus dem kontinuierlichen Prozess abgezogen wird und dem anströmenden ungereinigten Gasstrom laufend ungesättigtes Absorptionsmittel neu zugeführt wird, findet an der Phasengrenzfläche des Flüssigkeitsfilms ein ständiger Stoffaustausch statt, wodurch aus der Gasphase die oben genannten Verunreinigungen sehr effektiv entfernt werden können.

Nachdem das Gas den Flüssigkeitsfilm passiert hat, durchdringt es die Membran unter Abgabe von Absorptionsmittel. Nach dem Passieren der Membran sind in dem so vorgereinigten Gas organische Verunreinigungen nicht mehr nachweisbar bzw. bis auf den sub-ppt-Bereich entfernt worden und liegen in Konzentrationen von <10 ppt vor.

Betrachtet man den Gasdurchsatz durch die Membran von oben nach unten, stellt man fest, dass der Durchsatz nach untern hin infolge von Flüssigkeitsansammlungen und der damit verbundenen Zunahme des Strömungswiderstandes auf Null abfällt. In diesem Bereich der Membran entsteht eine "beruhigte Zone", in der das Absorbens zum Kondensatableiter geführt wird und aus dem Prozess ausgeschleust wird.

Um eine optimale Prozessführung zu erzielen, ist es notwendig, die Prozessparameter Temperatur, Gasstömungsgeschwindigkeit, Zufuhr von Absorptionsmittel, Gasdruck und Druckdifferenz zwischen Membranoberfläche und Phasengrenzfläche aufeinander abzustimmen, wobei zu berücksichtigen ist, dass diese Werte auf die Eigenschaften der zu reinigenden Chemikalie abzustimmen sind. Auch ist durch geeignete Mess- und Regelvorrichtungen eine durchgehende Einhaltung dieser Parameter zu gewährleisten, um kontinuierlich eine Aufreinigung der Chemikalien im sub-ppt-Bereich durchführen zu können.

Es hat sich gezeigt, dass in einer technischen Anlage gute Ergebnisse erzielt werden können, wenn der Gasstrom im Bereich von 100 bis 500 kg/h eingestellt wird. Die zur Aufreinigung notwendigen Temperatur- bzw. Druckwerte lassen sich mit herkömmlichen Rechnerprogrammen sehr gut vorausbestimmen und an die erfindungsgemäße Membranfiltration anpassen. Auch ein geeignetes Absorptionsmittel lässt sich für den Fachmann aus der Literatur ermitteln, da im allgemeinen aufgrund der Vorgeschichte des zu reinigendes Gases Rückschlüsse auf die enthaltenen Verunreinigungen gezogen werden können.

Das Gas wird nach der Membranfiltration einem Gaswäscher (12), der im Störfall als Puffer dient, zugeführt. Bei regulärem Prozessablauf in der Membranfiltration wird das Gas im Gaswäscher nicht mehr weiter aufgereinigt. Insbesondere im Fall eines Membranbruchs dient diese Stufe dem Schutz der nachfolgenden Anlagenteile vor Verunreinigungen mit kontaminiertem, nicht gereinigtem Gas.

Es wurde gefunden, dass durch das erfindungsgemäße Verfahren eine Gasaufreinigung zu einer sub ppt Qualität ermöglicht wird, die durch eine üblicherweise mittels Gaswäscher durchgeführte Aufreinigung nicht erreichbar ist.

Der nachgeschaltete Gaswäscher ist als einstufige Kolonne mit Füllkörper und Demister ausgelegt. Als Waschflüssigkeit wird eine gesättigte Lösung, hergestellt aus Ultra-Reinstwasser und aufgereinigtem Gas, verwendet. Die Waschflüssigkeit wird in einem separaten Tank (13) gelagert und im Kreis gefahren.

Nach erfolgter Aufreinigung des Gases kann sich sowohl eine Druckverdichtung des Gases und Abfüllung in Druckflaschen als auch die Herstellung gesättigter Lösungen des Gases anschließen.

Letzteres erfolgt in einer sogenannten "Mischstrecke".

Diese kann als Schlaufenreaktor ausgebildet sein, kann aber auch eine andere Ausgestaltung aufweisen. Wesentlich ist, dass das aufgereinigte Gas mit dem Lösungsmittel bei geregelten Temperatur und Druckverhältnissen mit einer möglichst großen Oberfläche des Lösungsmittels in Kontakt gebracht wird. Dieses erfolgt, indem das Gas in einen speziellen Mischer (14), welcher auf das jeweilige Lösungsvermögen des Gases angepasst ist, einer ständig zirkulierenden Lösung zugeführt wird.

Es wurde gefunden, dass gute Ergebnisse erzielt werden, wenn die Konzentrationsänderung am Mischungspunkt ca. 1 - 3 % beträgt. Dies wird durch die Einstellung eines entsprechenden Verhältnisses zwischen zirkulierender Lösungsmenge und Gasstrom erreicht. Üblicherweise wird in diesem Fall als Lösungsmittel Ultra-Reinstwasser verwendet.

Zur Herstellung gesättigter Lösungen stehen dem Fachmann verschiedene Ausführungsformen von Mischern zur Auswahl zur Verfügung. Üblicherweise weist ein geeigneter Mischer mehrere Einleitrohre auf, die sowohl in der Anzahl, der Form als auch der Länge auf das jeweilige Gas konstruktiv abgestimmt sind. Über die Einleitrohre wird der Gasstrom getrennt und an verschiedenen Stehen im Mischer in die ständig mit gleichem Druck und Durchsatz zirkulierende, niedrigkonzentrierte Lösung eingetragen und gelöst. Durch den exotherme Lösevorgang entsteht Wärme, die über einen oder mehrere Wärmetauscher abgeführt werden muss. Ist der Mischer als Schlaufenreaktor ausgestaltet, lassen sich solche Wärmetauscher in einfacher Weise integrieren.

In dem kontinuierlich durchgeführten Prozess ist eine regelmäßige Konzentrationsbestimmung notwendig, um gegebenenfalls Prozessparameter korrigieren zu können bzw. Störungen im Prozess zu beheben bzw. zu vermeiden.

Für den erfindungsgemäßen Aufreinigungsprozess ist wesentlich, dass die Konzentrationsregelung nicht wie üblich über den Gastrom erfolgt sondern über das Lösungsmittel, in der Regel Ultra-Reinstwasser. Erfolgt die Regelung der Konzentrationseinstellung über den Gasstrom, kommt es zu Änderungen der Prozessparameter wie Druck und Durchsatz und damit zu Prozessänderungen an der Membrane der Aufreinigungsstufe (10). Eine geregelte Konzentrationseinstellung mittels Messung und Regelung des Drucks und des Volumenstroms ist nicht ohne weiteres zuverlässig durchführbar.

Eine einfache, schnelle und direkte Methode zur Konzentrationsbestimmung basiert auf Schallgeschwindigkeitsmessungen in der Lösung und deren online Auswertung.

Die Schallgeschwindigkeit ist von der Dichte und der adiabatischen Kompressibilität der Lösung abhängig. Um die geforderte Konzentrationsabweichung von < 0,5% in der Lösung einhalten zu können, ist sowohl eine genaue Bestimmung der Lösungstemperatur als auch eine auf die Rückkopplung der Schallgeschwindigkeit erforderliche genaue Rohrsonde notwendig.

Erfindungsgemäß wird dieses Problem gelöst, indem die notwendige Temperaturmessung nicht in der Rohrsonde selbst erfolgt sondern in einer Beruhigungsstrecke. Die Beruhigungsstrecke ist als Rohrleitung mit einem "schlecht" wärmeableitenden Kunststoff ausgelegt. Das bei Druck- und Temperaturänderungen unterschiedliche Sättigungsverhalten von Kunststoffen in Lösungen mit hohen Dampfdrücken führt zu einem differenzierten Messverhalten in der Schallrückkopplung der Rohrsonde. Dieses Verhalten der Kunststoffe wird dadurch berücksichtigt, dass der Prozess in der Schlaufe immer unter den gleichen Prozessbedingungen gefahren wird.

Um der Trägheit des Regelungssystems beim Anfahren der Anlage entgegenzuwirken, ist im Schlaufenreaktor ein Pufferbehälter (15) eingebaut. Da die in der Schlaufe befindliche Lösung immer den gleichen Prozessbedingungen unterworfen ist, kann die Könzentrationsreglung sich über die bereits eingestellte Lösung angleichen, ohne dass es zu den sonst üblichen Konzentrationsschwankungen beim Anfahren der Anlage im System kommt. Der Pufferbehälter führt insgesamt zu einem besseren Regelverhalten und gleicht kleine Schwankungen im Zulauf des Lösungsmittels aus.

Die Ausschleusung der Lösung erfolgt über eine fest eingestellte Mengenreglung kontinuierlich in die Lagertanks (17).

Zur Herstellung der einzelnen Bauteile der Anlage sind Werkstoffe auszuwählen , welche gegenüber dem korrosiven Angriff des zu reinigenden Gasstroms inert verhalten, aber auch den Reinheitsanforderungen in den einzelnen Stufen entsprechen. Eingesetzt werden können hochwertige Edelstähle, Kunststoffe wie PTFE, PVDF, PFA, PE. Insbesondere nach den ersten Reinigungsstufen im reinen Bereich ist die Anlage in hochwertigen Kunststoffen ausgeführt.

Zum besseren Verständnis und zur Verdeutlichung der Erfindung wird im folgenden beispielhaft ein Fließschema einer möglichen Anordnung einer Anlage wiedergegeben, die im Rahmen des Schutzbereichs der vorliegenden Erfindung liegt. Diese ist jedoch aufgrund der allgemeinen Gültigkeit des beschriebenen Erfindungsprinzips nicht geeignet, den Schutzbereich der vorliegenden Anmeldung nur auf dieses Beispiel zu reduzieren, da es dem Fachmann ohne weiteres möglich ist, je nach zu reinigendem Gas Variationen im Aufbau der Anlage vorzunehmen und einzelne Teile der Anlage durch gleichwirkende Einrichtungen zu ersetzen.

Im Fließschema 1 wird beispielhaft der Aufbau einer erfindungsgemäßen Anlage wiedergegeben. Diese Anlage weist folgende Bestandteile auf:
(1) Verdampfer
(2) Vorfilter
(3) Druckregelung
(4) Wärmetauscher
(5) Feinstfilter
(6) Organikabscheider
(7) Auffangbehälter
(8) Druckbehälter
(9) Sättigungsbehälter
(10) Membranfiltration
(11) Kondensatbehälter
(12) Gaswäscher
(13) Tank
(14) Mischer
(15) Pufferbehälter
(16) Wärmetauscher
(17) Lagertank

**Tabelle 1: Produktqualität einer erfindungsgemäß hergestellten 28%igen wässrigen Ammoniaklösung**

| | **Rohprodukt NH₃ 100% [ppb]** | **gereinigtes NH₄OH 28% [ppb]** |
|---|---|---|
| **Al** | 3,8 | <0,01 |
| **As** | <1 | <0,01 |
| **Au** | <1 | <0,01 |
| **B** | 2,3 | <0,01 |
| **Ba** | <1 | <0,01 |
| **Be** | <1 | <0,01 |
| **Bi** | <1 | <0,01 |
| **Ca** | 7,4 | <0,01 |
| **Cd** | <1 | <0,01 |
| **Co** | 1,0 | <0,01 |
| **Cr** | 1,0 | <0,01 |
| **Cu** | 1,5 | <0,01 |
| **Fe** | 16,0 | <0,01 |
| **Ga** | <1 | <0,01 |
| **Ge** | <1 | <0,01 |
| **In** | <1 | <0,01 |
| **K** | 4,6 | <0,01 |
| **Li** | <1 | <0,01 |
| **Mg** | 2,1 | <0,01 |
| **Mn** | 1,0 | <0,01 |
| **Mo** | <1 | <0,01 |
| **Na** | 5,7 | <0,01 |
| **Ni** | 1,0 | <0,01 |
| **Pb** | <1 | <0,01 |
| **Pd** | <1 | <0,01 |
| **Pt** | <1 | <0,01 |
| **Sb** | <1 | <0,01 |
| **Sn** | <1 | <0,01 |
| **Sr** | <1 | <0,01 |
| **Ti** | <1 | <0,01 |
| **Tl** | <1 | <0,01 |
| **V** | <1 | <0,01 |
| **Zn** | 2,3 | <0,01 |
| **Zr** | | |
| | | |
| **TOC** | **>10.000** | <501 |

**Tabelle 2: Zusammensetzung von Fitterrückständen und Verunreinigungen enthalten im Kondensat, welches am Membranfilter abgeführt worden ist.**

| | **Auffangbehälter des Abscheiders [ppb]** | **Filter [ppb]** |
|---|---|---|
| **Al** | 30 | 230 |
| **As** | | |
| **Au** | <1 | <1 |
| **B** | 14 | 1250 |
| **Ba** | 4 | <1 |
| **Be** | <1 | <1 |
| **Bi** | <1 | <1 |
| **Ca** | 560 | 85 |
| **Cd** | 4 | 270 |
| **Co** | 1 | 9 |
| **Cr** | 19 | 140 |
| **Cu** | 180 | 7860 |
| **Fe** | 75 | 240 |
| **Ga** | <1 | <1 |
| **Ge** | <1 | <1 |
| **In** | <1 | <1 |
| **K** | 170 | 1950 |
| **Li** | <1 | 28 |
| **Mg** | 220 | 75 |
| **Mn** | 27 | 1000 |
| **Mo** | 39 | 440 |
| **Na** | 760 | 3270 |
| **Ni** | 240 | 900 |
| **Pb** | 1 | 1 |
| **Pd** | | |
| **Pt** | <1 | <1 |
| **Sb** | | |
| **Sn** | <1 | <1 |
| **Sr** | 2 | <1 |
| **Ti** | <1 | <1 |
| **Tl** | <1 | <1 |
| **V** | <1 | <1 |
| **Zn** | 380 | 8780 |
| **Zr** | <1 | <1 |
| | | |
| **TOC** | 7000 | 218000 |

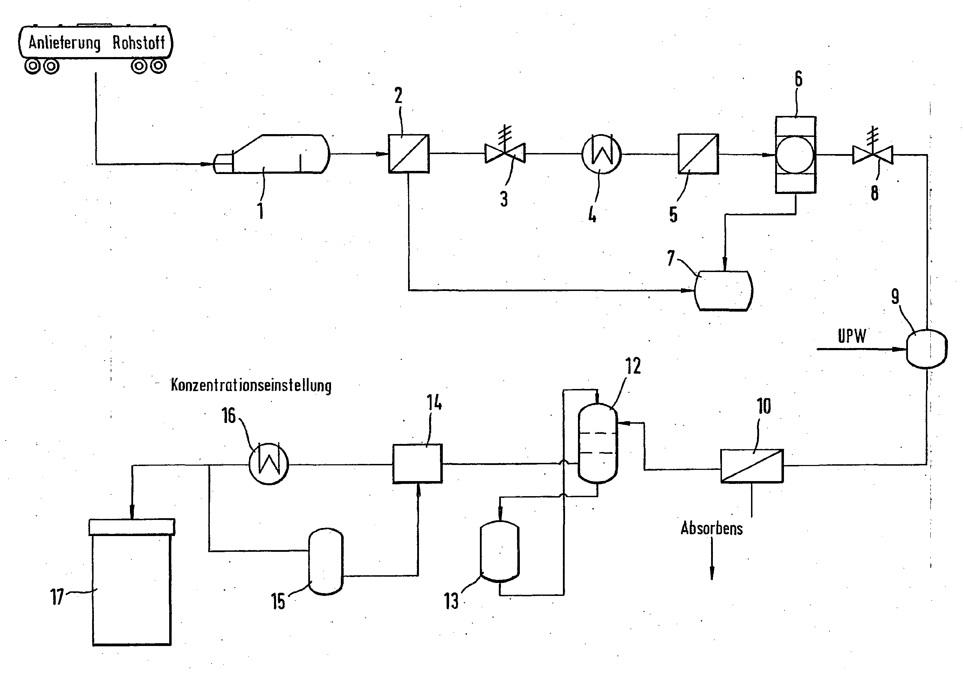

## Patentansprüche

1. Kontinuierliches Verfahren zur Entfernung von partikulären, metallischen, ionischen anorganischen, ionischen organischen und von nichtionischen organischen Verunreinigungen und in Spuren vorhandener Salze oder Öle aus korrosiv wirkenden Gasen, **dadurch gekennzeichnet, dass** in mindestens einem Verfahrensschritt das Gas mit einem Absorptionsmittel angereichert wird, welches mit dem Gas gut mischbar ist und in dem die im Gas enthaltenen Verunreinigungen gut löslich sind, und anschließend das Gas einer Membranfiltration unterzogen wird, wobei der gereinigte Gasstrom die Membran durchströmt, eine kondensierte Phase des Absorptionsmittels auf der Membranoberfläche gebildet wird und das mit Verunreinigungen angereicherte Absorptionsmittel kontinuierlich abgezogen wird.

2. Kontinuierliches Verfahren gemäß Anspruch 1 zur Entfernung von partikulären, metallischen, ionischen anorganischen, ionischen organischen aber auch von nichtionischen organischen Verunreinigungen und in Spuren vorhandener Salze oder Öle aus korrosiv wirkenden Gasen, **dadurch gekennzeichnet, dass**
a) eine im flüssigen Zustand vorliegende Chemikalie in einem Verdampfer in den gasförmigen Zustand überführt werden,
b) mittels eines Vorfilters von groben partikulären Verunreinigungen und zum Teil von als Aerosol vorliegenden Verunreinigungen befreit werden, wobei letztere einem Auffangbehälter (7) zugeführt werden,
c) durch Einstellung des Drucks auf einen Wert in einem Bereich zwischen 2 bis 8 bar, vorzugsweise 3 bis 8 bar, und gleichzeitiger Erniedrigung der Temperatur auf einen Wert im Bereich von 20 bis 50°C im Gasstrom weitere enthaltene organische Verunreinigungen abschieden werden,
d) der so vorgereinigte Gastrom durch mindestens zwei hintereinandergeschaltete Feinstfilter mit abnehmender Porengröße geführt wird, wobei in der Gasphase vorliegende feinste Partikel über eine Membran abgeschieden werden,
e) noch enthaltene organische Verunreinigungen mit Hilfe eines Organikabscheiders abgetrennt und in einen Auffangbehälter (7) geleitet werden und
f) dem Gasstrom über einen Sättigungsbehälter ein Absorptionsmittel zugeführt wird, wobei letzteres mit dem zu reinigenden Gas gut mischbar ist, eine Oberflächenspannung >50 dynes aufweist,
g) der Gasstrom einer Membranfiltration unterzogen wird, wobei, eine kondensierte Phase des Absorptionsmittels auf der Membranoberfläche gebildet wird und Absorptionsmittel entzogen wird, und anschließend in einem Mischer in eine ständig zirkulierende Lösung eingeleitet wird, deren Konzentration mittels Schallgeschwindigkeitsmessung überwacht und geregelt wird.

3. Verfahren gemäß der Ansprüche 1 bis 2, **dadurch gekennzeichnet, daß** als im flüssigen Zustand vorliegende Chemikalie eine Chemikalie ausgewählt aus der Gruppe Ammoniak, Fluorwasserstoff und Salzsäure eingesetzt wird.

4. Verfahren gemäß Anspruch 2, **dadurch gekennzeichnet, dass** die Einstellung des Drucks und der Sättigung des Gases mit Absorptionsmittel mit Hilfe eines Druckminderers und eines Wärmetauschers erfolgt.

5. Verfahren gemäß Anspruch 2, **dadurch gekennzeichnet, dass** im Organikabscheider das Mehrphasengemisch durch Druck- und Temperatureinstellung eine Trennung von leicht siedenden und schwer siedenden organischen Verunreinigungen stattfindet, so dass die leichtsiedenden Verunreinigungen als Gas- bzw. Dampfgemisch und die schwer siedenden als kondensiertes Öl oder in Aerosolform vorliegen, die anschließend mittels geeigneter Membranen abgetrennt werden.

6. Verfahren gemäß Anspruch 2, **dadurch gekennzeichnet, daß** dem Organikabscheider ein weiterer Druckminderer zur Einstellung des Drucks auf einen Wert im Bereich zwischen 1 bis 6 bar nachgeschaltet ist.

7. Verfahren gemäß der Ansprüche1 und 2, **dadurch gekennzeichnet, daß** im Verfahrensschritt g) zur Abtrennung von feinsten partikulären, metallischen, ionischen anorganischen, ionischen organischen aber auch von nichtionischen organischen Verunreinigungen und in Spuren vorhandener Salze oder Öle Membrane aus einem hydrophoben Trägermaterial verwendet werden.

8. Verfahren gemäß der Ansprüche 1 und 2, **dadurch gekennzeichnet, dass** als Absorptionsmittel Ultra-Reinstwasser verwendet wird.

9. Verfahren gemäß Anspruch 2, **dadurch gekennzeichnet, daß** der Membranfiltration des Verfahrensschritts g) ein Gaswäscher in Form einer Füllkörperkolonne mit eingebautem Demister nachgeschaltet ist, welcher im Störfall als Puffervolumen dient.

10. Verfahren gemäß Anspruch 2, **dadurch gekennzeichnet, dass** der Gasstrom im Verfahrensschritt g) in einen Mischer mit mehreren Einleitrohren geführt wird, worin die Lösung zirkuliert und beim Lösen entstehende exotherme Wärme in einer Schlaufe oder einem oder mehreren Wärmetauschern abgeführt wird.

11. Verfahren gemäß Anspruch 2, **dadurch gekennzeichnet, dass** die Konzentration des gelösten gereinigten Gases durch Schallgeschwindigkeitsmessung kombiniert mit einer genauen Bestimmung der Lösungstemperatur überwacht und geregelt wird.

12. Verfahren gemäß Anspruch 1, **dadurch gekennzeichnet, dass** das Absorptionsmittel eine Oberflächenspannung von 50 dynes und mehr aufweist.

13. Verwendung einer Membran, welche einen Flüssigkeitsfilm aufweist, zur Abtrennung sowohl von gelösten als auch partikulären Verunreinigungen aus korrosiv wirkenden Gasen.

## Claims

1. A continuous process for the removal of particulate, metallic, ionic inorganic, ionic organic and of nonionic organic impurities and trace salts or oils from corrosive gases, wherein in at least one process step the gas is enriched with an absorbent which is readily miscible with the gas and in which the impurities present in the gas are readily soluble, and the gas is subsequently subjected to a membrane filtration, wherein the purified gas stream passes through the membrane, a condensed phase of the absorbent is formed on the membrane surface and the absorbent enriched with impurities is continuously drawn off.

2. The continuous process according to claim 1 for the removal of particulate, metallic, ionic inorganic, ionic organic, but also of nonionic organic impurities and trace salts or oils from corrosive gases, wherein
a) a chemical in the liquid state is converted into the gaseous state in an evaporator,
b) is freed of coarse particulate impurities and partially freed of impurities in aerosol form by means of a pre-filter, wherein the latter impurities are fed to a collecting tank (7),
c) further organic impurities present in the gas stream are separated by adjustment of the pressure to a value in a range between 2 to 8 bar, preferably 3 to 8 bar, and simultaneous lowering of the temperature to a value in the range from 20 to 50°C,
d) the thus pre-purified gas stream is passed through at least two very fine filters with decreasing pore size connected in series, wherein the finest particles present in the gas phase are removed via a membrane,
e) organic impurities still present are removed with the aid of an organics separator and passed into a collecting tank (7)and
f) an absorbent is added to the gas stream via a saturation vessel, wherein the absorbent is readily miscible with the gas to be purified and has a surface tension of >50 dynes,
g) the gas stream is subjected to a membrane filtration, wherein a condensed phase of the absorbent is formed on the membrane surface and absorbent is withdrawn and subsequently introduced in a mixer into a continuously circulating solution the concentration of which is monitored and controlled by means of sound velocity measurement.

3. The process according to either of claims 1 and 2, wherein a chemical selected from the group ammonia, hydrogen fluoride and hydrochloric acid is used as the chemical in the liquid state.

4. The process according to claim 2, wherein the adjustment of the pressure and of the saturation of the gas with absorbent are effected with the aid of a pressure reducer and a heat exchanger.

5. The process according to claim 2, wherein a separation of low-boiling and high-boiling organic impurities from the multi-phase mixture takes place in the organics separator due to pressure and temperature adjustment, so that the low-boiling impurities are present in the form of a gas and/or vapor mixture and the high-boiling impurities are present in the form of a condensed oil or an aerosol, which are subsequently removed by means of suitable membranes.

6. The process according to claim 2, wherein the organics separator has a further pressure reducer connected downstream of it for adjustment of the pressure to a value in the range between 1 to 6 bar.

7. The process according to claims 1 and 2, wherein membranes composed of a hydrophobic substrate are used in process step g) for the removal of the finest particulate, metallic, ionic inorganic, ionic organic, but also of nonionic organic impurities and trace salts or oils.

8. The process according to claims 1 and 2, wherein the absorbent used is ultrapure water.

9. The process according to claim 2, wherein the membrane filtration of process step g) has a gas scrubber in the form of a packed column with an installed demister connected downstream of it which serves as a buffer volume in the event of a fault.

10. The process according to claim 2, wherein in process step g) the gas stream is fed into a mixer which has more than one input tube and in which the solution circulates, and exothermic heat generated during dissolution is dissipated in a loop or in one or more heat exchangers.

11. The process according to claim 2, wherein the concentration of the dissolved purified gas is monitored and controlled via sound velocity measurement combined with a precise determination of the solution temperature.

12. The process according to claim 1, wherein the absorbent has a surface tension of 50 dynes or more.

13. The use of a membrane having a liquid film, for the removal of dissolved as well as particulate impurities from corrosive gases.

## Revendications

1. Procédé continu pour l'élimination d'impuretés particulaires, métalliques, inorganiques ioniques, organiques ioniques et d'impuretés organiques non ioniques et d'huiles ou de sels présents à l'état de traces, à partir de gaz à action corrosive, **caractérisé en ce que** dans au moins une étape du procédé on concentre le gaz à l'aide d'un d'absorbant qui est bien miscible au gaz et dans lequel les impuretés contenues dans le gaz sont bien solubles, et ensuite on soumet le gaz à une filtration sur membrane, le courant de gaz épuré traversant la membrane, une phase condensée de l'absorbant étant formée sur la surface de la membrane et l'absorbant chargé d'impuretés étant déchargé en continu.

2. Procédé continu selon la revendication 1 pour l'élimination d'impuretés particulaires, métalliques, inorganiques ioniques, organiques ioniques mais également d'impuretés organiques non ioniques et d'huiles ou de sels présents à l'état de traces, à partir de gaz à action corrosive, **caractérisé en ce que**
a) dans un évaporateur on convertit à l'état gazeux une substance chimique se trouvent à l'état liquide,
b) au moyen d'un pré-filtre on sépare des impuretés en grosses particules et en partie des impuretés se trouvant sous forme d'aérosol, ces dernières étant envoyées à un récipient collecteur (7),
c) par ajustement de la pression à une valeur dans une plage comprise entre 2 et 8 bars, de préférence 3 à 8 bars, et abaissement simultanée de la température jusqu'à une valeur dans la plage de 20 à 50 °C dans le courant de gaz on sépare d'autres impuretés organiques contenues,
d) on fait passer le courant de gaz ainsi épuré à travers au moins deux filtres très fins placés l'un à la suite de l'autre, à taille de pore décroissante, les très fines particules présentes dans la phase gazeuse étant séparées au moyen d'une membrane,
e) les impuretés organiques encore contenues sont séparées à l'aide d'un séparateur de substances organiques et envoyées dans un récipient collecteur (7), et
f) au moyen d'un saturateur on introduit dans le courant de gaz un absorbant, ce dernier étant bien miscible au gaz à épurer et présentant une tension superficielle > 50 dynes,
g) on soumet le courant de gaz à une filtration sur membrane, une phase condensée de l'absorbant étant formée sur la surface de la membrane et l'absorbant étant éliminé, et ensuite dans un mélangeur on le fait passer dans une solution en circulation permanente, dont la concentration est contrôlée au moins d'une mesure de la vitesse du son et réglée.

3. Procédé selon les revendications 1 et 2, **caractérisé en ce que** la substance chimique se trouvant à l'état liquide est une substance chimique choisie dans le groupe constitué par l'ammoniac, l'acide fluorhydrique et l'acide chlorhydrique.

4. Procédé selon la revendication 2, **caractérisé en ce qu'**on effectue le réglage de la pression et la saturation du gaz par l'absorbant à l'aide d'un réducteur de pression et d'un échangeur thermique.

5. Procédé selon la revendication 2, **caractérisé en ce que** dans le séparateur de substances organiques a lieu une séparation d'impuretés organiques à bas point d'ébullition et à haut point d'ébullition à partir du mélange multiphase, par ajustement de la pression et de la température, de sorte que les impuretés à bas point d'ébullition se trouvent sous forme de mélange de gaz ou de vapeurs et les impuretés à haut point d'ébullition se trouvent sous forme d'huile condensée ou sous forme d'aérosol, et sont ensuite séparées au moyen de membranes appropriées.

6. Procédé selon la revendication 2, **caractérisé en ce qu'**au séparateur de substances organiques est raccordé en aval un autre réducteur de pression pour l'ajustement de la pression à une valeur dans la plage comprise entre 1 et 6 bars.

7. Procédé selon les revendications 1 et 2, **caractérisé en ce que** dans l'étape g) du procédé pour la séparation de très fines impuretés particulaires, métalliques, inorganiques ioniques, organiques ioniques, mais également d'impuretés organiques non ioniques et d'huiles ou de sels présents à l'état de traces, on utilise des membranes à base d'un matériau de support hydrophobe.

8. Procédé selon les revendications 1 et 2, **caractérisé en ce qu'**on utilise comme absorbant de l'eau ultrapure.

9. Procédé selon la revendication 2, **caractérisé en ce qu'**à la filtration sur membrane de l'étape g) du procédé est raccordée en aval un laveur de gaz sous forme d'une colonne à corps de garnissage à dévésiculeur incorporé, qui en cas d'incident sert de volume tampon.

10. Procédé selon la revendication 2, **caractérisé en ce que** dans l'étape g) du procédé on fait passer le courant de gaz dans un mélangeur à plusieurs tubes d'arrivée, dans lequel la solution circule et la chaleur exothermique dégagée lors de la dissolution est dissipée dans une boucle ou dans un ou plusieurs échangeurs thermiques.

11. Procédé selon la revendication 2, **caractérisé en ce que** la concentration du gaz épuré dissous est contrôlée par mesure de la vitesse du son combinée à une détermination précise de la température de la solution, et réglée.

12. Procédé selon la revendication 1, **caractérisé en ce que** l'absorbant présente une tension superficielle de 50 dynes et plus.

13. Utilisation d'une membrane, qui comporte une pellicule de liquide, pour la séparation aussi bien d'impuretés dissoutes que d'impuretés particulaires à partir de gaz à action corrosive.
